# EUROPEAN PATENT SPECIFICATION

(11) **EP 1 210 756 B1**
(45) Date of publication and mention of the grant of the patent: **24.11.2004**
(21) Application number: 00958858.3
(22) Date of filing: 08.09.2000
(51) Int. Cl.: H02G 3/38, H01R 13/518

(54) **A SUPPORT STRUCTURE**
TRÄGERSTRUKTUR
STRUCTURE DE SUPPORT

(30) Priority: 08.09.1999 GB 9921139
(43) Date of publication of application: 05.06.2002
(73) Proprietor: Farrell Brothers Research Limited, Ardee, County Louth (IE)
(72) Inventor: CARSON, Richard, Bath BA2 6DE (GB); FARRELL, Paul, Ardee, County Louth (IE); MITCHELL, Nigel, Idle, Bradford (GB)
(74) Representative: Bryer, Kenneth Robert
(86) International application number: PCT/GB2000/003475
(87) International publication number: WO 2001/018929

(56) References cited:
- EP-A- 0 458 487
- US-A- 5 203 713

## Description

The present invention is concerned with a support structure, especially adapted for utility modules, for use particularly although not exclusively, within an office or workplace environment. As used in this specification the term utility module will be understood to include electrical connectors, switches or lamps, telephone or communication connectors as well as gas or water connectors, valves or meters. The present invention generally addresses the problem of providing a range of utility connections whilst minimising the amount of exposed wiring and cable associated with the connections. The present invention is particularly aimed at a structure for supporting utility connectors such as plug and socket connectors between utilising apparatus and fixed power supply, signal line or network wiring or cable sources, in which adjacent or closely spaced connector modules, particularly sockets, may be located on opposite sides of the structure.

In one known connector structure, suitable for use with office furniture, especially desks and divider screens or partitions, a plurality of connector modules, in the form of sockets for power, telephone or communication links, are arranged within a housing or support structure in a longitudinal array. The connector modules may have switches or there may be switch modules individually associated with each connector module, or alternatively a single switch module associated with all the connector modules in the array, especially if all the connector modules in the array are of a single type. The housing or support structure contains the permanent or fixed wiring associated with each connector module, which exits the housing or support structure at a suitable concealed location via a cable leading to a suitable power or signal source as appropriate.

These prior art connector structures are, however, limited by the fact that the connector modules are longitudinally arranged in the housing or support structure so as to face out of the housing or support structure in the same direction. In a typical office or other workplace environment such an arrangement can be disadvantageous since it does not allow connection to a plurality of users whilst optimising the use of available space. Where, for example, electrical or other connections are required to equipment in a number of regions throughout an office or workplace it is common for sockets to be arranged on or in association with some convenient surface, which may be a vertical or horizontal surface of the building. Typically sockets are located in the skirting or wainscoting of a room. The result of such an arrangement is well-known to most office workers as a large and often unacceptable amount of cable wiring on the floor.

An improvement to this situation is achieved by mounting connector structures away from walls, for example, in partition screens and other supports arranged adjacent to desks or work stations so that wiring leading to equipment on the desk or at the work station from the connector can be of minimal length. Very often, however, two desks or work stations are positioned in a juxtaposed facing relationship to each other. A screen having a connector structure mounted on one face then only facilitates the electrical or other connections to one of them. Provision of electrical or other connections to both desks or work stations requires the provision of two screens each provided with its own connector structure or a single screen must have two such connector structures fitted thereto. Because such screens are manufactured in factories remote from the installation site and since, for economic reasons, they are built with a high degree of modularity, this is not usually possible. European Patent Application EP-A-0458487 shows just such a structure. Box-section chambers are formed by a longitudinal web which has upper and lower flanges fronted by snap engageable panels to cover the channels which house cables. An opening in the panel is provided to house an outlet unit. A power distribution system is described in US-A-5203713 although there is no reference to incorporation into a divider wall. A central powerblock has contacts for connectors of outlet units. Neither of these documents offers a solution to the problem of providing oppositely facing outlets on a thin divider wall or panel.

The present invention seeks to improve upon this situation by providing a connector structure of greater flexibility than conventional connector structures so as to allow a more efficient use of work space whilst at the same time minimising the amount of cable required.

According to one aspect of the present invention, there is provided a support structure according to Claim 1 of the appended claims.

In one embodiment of the invention the said holding means may be integrally formed with the said elongate support elements. In other embodiments of the invention the holding means for holding the support structure together may be connectable to both the elongate support elements.

In one such embodiment the holding means may in fact be the utility modules themselves. In preferred embodiments of the invention, however, the holding means may comprise one or more connector elements.

One connector element according to the invention may take the form of a bridging-element in which the surface is shaped so as to allow the passage of wiring or conduits in a direction parallel to the longitudinal direction of the elongate support elements. Preferably the bridging element performs the function of prevention of entanglement of wiring or conduits within the support structure by separating wiring or conduits leading to utility modules located in one side of the support structure from wiring or conduits leading to utility modules located in the opposite side of the support structure.

Another connector element according to the present invention may take the form of a partitioning-element so as to prevent the passage of wiring or conduits in a direction parallel to the longitudinal direction of the elongate support elements. The partitioning element, as well as providing holding means for the elongate support elements, also allows compartments to be formed along the length of the support structure so that communication connector modules may be kept separate from power connector modules.

Still another connector element according to the present invention comprises an end-plate shaped so as to close the support structure into a housing. The end-plates may be so adapted as to allow or to prevent the passage of wiring or conduits in a direction parallel to the longitudinal direction of the elongate support elements. Such adaptation may take the form of the provision of appropriately sized apertures, possibly with grommets, for guiding wiring or cable into or out of the support structure or housing.

In preferred embodiments of the invention the connector elements provide holding means between the elongate support elements by form-engagement means. The form-engagement means may or may not be snap-fit engagement means. In one embodiment of the invention the form-engagement means may be slide-engagement and snap-fit engagement means.

In one embodiment of the invention end-plates provide holding means between the elongate support elements by removeable fastening means. Preferably said fastening means are screw fasteners.

Yet another connector element of the present invention comprises wall elements for insertion along the longitudinal length of the elongate support elements in an analogous way to the utility modules. For this purpose the said wall elements may take the form of plates with form-engagement means identical to that of that of the utility modules. The wall elements of the present invention allow the utility modules to be connected in any suitable combination.

The wall elements are required because direct overlap of utility modules facing out of the support structure in one direction with utility modules facing out of the support structure in the opposite direction cannot always be achieved. The connection of wall elements allows for alternately facing utility modules or partially overlapping opposite facing utility modules. It should, however, be understood that the overlap of utility modules facing out of the support structure in opposite directions, does fall within the scope of the present invention although safety considerations would require an increase in the distance between the longitudinal pairs of edges of the elongate support structures and so possibly reduce the benefit accrued. It should be further understood that the invention also provides for a plurality of utility modules to face out of the support structure in the same direction by providing only wall elements along a selected pair of longitudinal edges of the elongate support members.

The support structure of the present invention may therefore be customised on installation so as to provide utility modules selected according to the needs of the workplace. The utility modules may be arranged in any combination to face out of the housing in opposite directions. The utility modules may also be arranged in any number appropriate to the length of the elongate support elements although where the support structure is directed towards the provision of electrical power, safety considerations may limit the number of electrical connectors modules.

Utility modules suitable for the practice of the present invention may be selected from any of the group comprising sockets, switches, lamps or other electrical connectors and connectors for optical fibres, gas water or air pipes or conduits and include valve or metering arrangements.

The elongate support elements and the connector elements of the present invention may be made from a plastics material in accordance with electrical safety standards. They may extruded or injection moulded. Preferably the elongate support elements are extruded and the connector elements injection moulded from the same plastics material. One suitable material is rigid PVC or ABS, built in either case to VO rating (self-extinguishing).

In a further aspect of the present invention the elongate support members may comprise further engagement means for engaging a panel or like member, said engagement means being located upon each surface of said elongate support element facing away from the other of said elongate support elements.

The engagement means may generally comprise form-engagement means and may be arranged on the surface of the elongate support element such that when the panel is engaged to the support structure their surfaces may be coplanar or alternatively non-coplanar.

In another aspect, the present invention provides an assembly comprising the support structure defined above and panels or like members engaged to a surface of at least one of the elongate support elements, said surface facing away from the other elongate support element.

In one embodiment opposite faces of the said support structure may be spaced a smaller distance from one another than opposite faces of the panel. In another embodiment opposite faces of the said support structure may be spaced from one another by a greater distance than opposite faces of the panel.

In still a further embodiment of the invention the assembly may comprise a panel engaged on a surface of each of said elongate support elements, said surfaces facing away from said other elongate support element. In other embodiments the assembly may comprise separate panel elements at or adjacent respective lateral edges of the said surface of the or each elongate support element.

A further aspect provides for a kit for the construction of the support structure and assembly of the present invention. The kit may comprise the elongate support elements, and connector elements with or without utility modules or panels.

It should be understood that the panel referred to in the present specification may comprise a screen, especially a partitioning screen or a flat surface of an item of furniture or work equipment. It should also be understood that the relationship between the surface of the elongate support element and the panel need not be perpendicular so that a number of orientations of panels in relation to the support structure and each other, are possible.

Various embodiments of the invention will now be described by way of nonlimiting example with reference to the following drawings in which
Fig. 1 is a general perspective view of a screen panel incorporating a support structure according to the invention;
Fig. 2 is a perspective view of the support structure in isolation;
Fig. 3 is an exploded view of a support structure according to a first embodiment of the invention showing the arrangement of the elongate support and connector elements;
Figs. 4 a, and 4b are front and rear views of two embodiments of the invention;
Figure 5 is an end view of an elongate support element suitable for use in embodiments of the invention;
Figs. 6 a, b, c, are perspective views of respectively an end-piece, a bridging-piece and a separating piece suitable for forming part of an embodiment; and
Figure 7 a, b, c are sectional views of alternative configuration utilising the support elements of Figure 5.

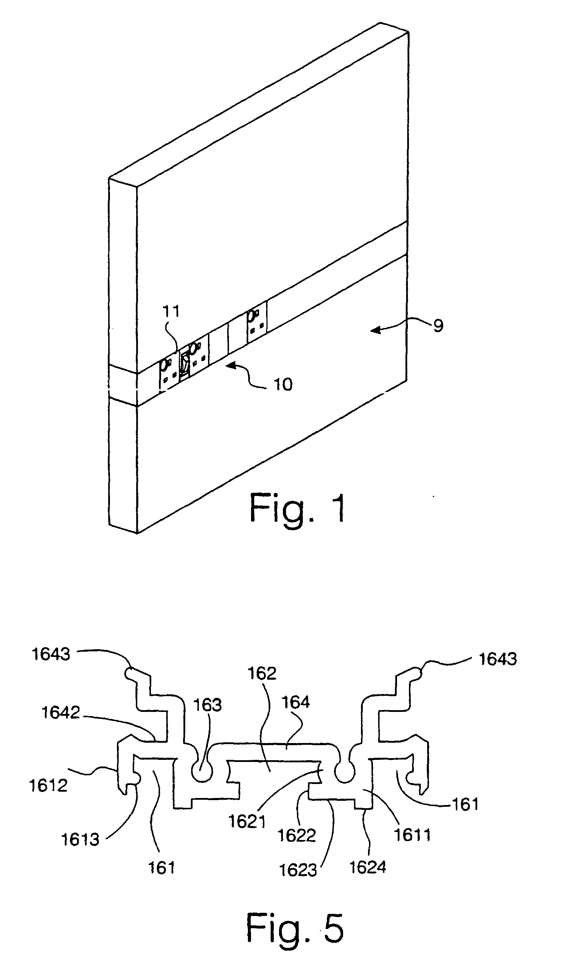

Referring first to Figure 1 there is shown an office partition screen generally indicated 9 showing the provision of a housing assembly or a tray 10 of power connection modules or sockets 11 at an intermediate height.

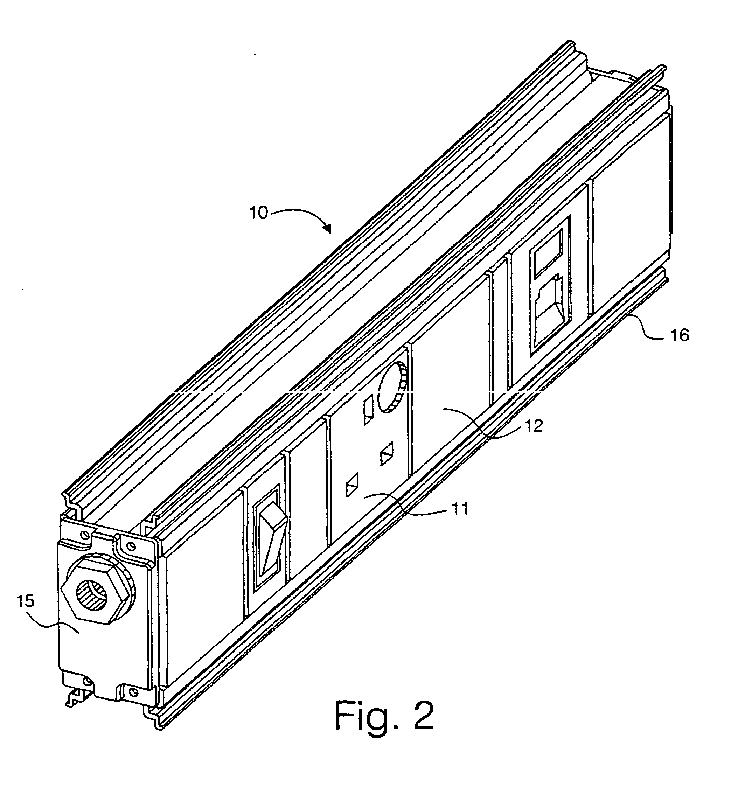

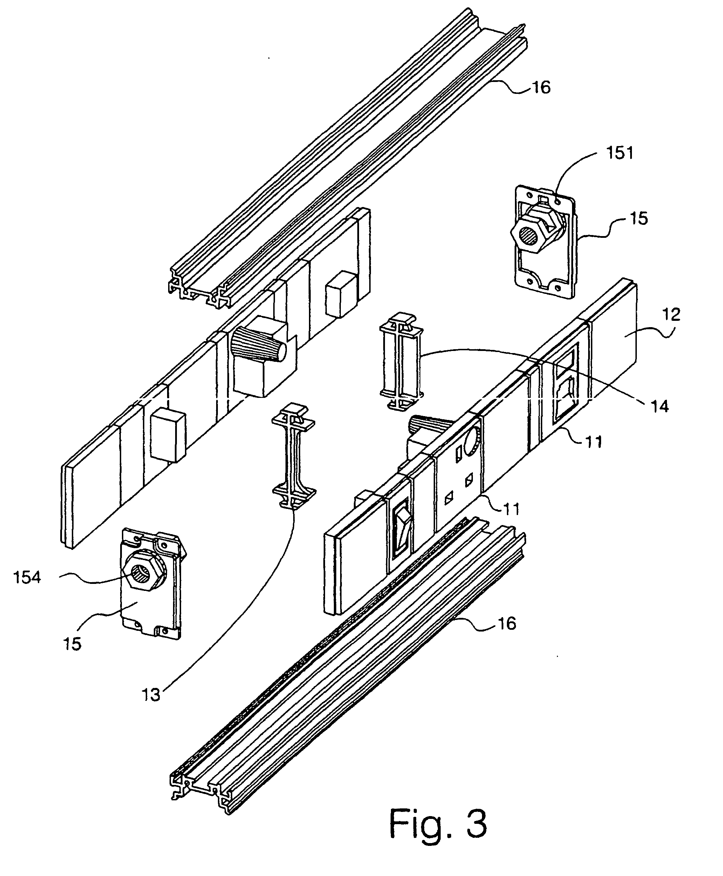

Figures 2 and 3 illustrate an embodiment of the invention comprising a housing 10 having an array of power connection modules or sockets 11, wall-pieces 12, bridging-pieces 13 and separator-pieces 14 spanning between two elongate support elements 16. The elements or strips 16 may thus be said to comprise the top and bottom of the housing whilst the parts 11-14 may be said to comprise the walls of the housing. The housing is completed by end-pieces 15 which are connected to the strips 16 by screws extending through apertures 151 of the end-pieces into at least partially threaded grooves 161 extending the length of the strips 16. In this embodiment the connection modules 11 are sockets and switches for connection to an electricity supply and are arranged in the side wall so as to face out of the housing in the same direction. The opposite side wall is formed solely from wall-pieces 13 and bridging-pieces 14. Sockets are of a conventional type and have associated apertures for receipt of fuse elements. The sockets are shown orientated in a conventional "upright" orientation although it should be understood that they may be orientated at any angle that improves the lead in of plugs and their associated cables to the connector array. End-pieces 15 are provided with an opening 154 which may be provided with a grommet for receipt of one or more power cables into the housing.

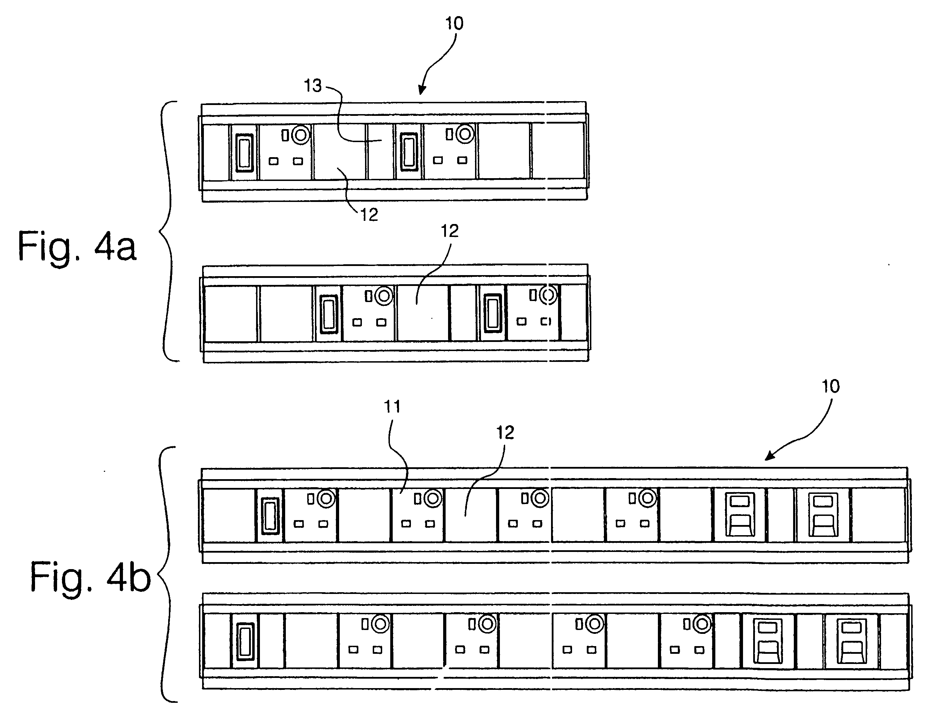

As can be seen in Fig. 4a, a housing 10 may have a multiplicity of the wall-pieces 12 and/or bridging pieces 13 forming the previously unfunctionalised wall replaced by connection modules 11. That is, connection modules I are shown arranged within the housing 10 so as to face out of the housing in each of two opposite directions. This arrangement is shown as alternately staggered although it should be understood that any arrangement may be used provided that there is sufficient room across the width of the housing to avoid contact of the associated wiring. For example an alternate staggered block arrangement may be used or an arrangement involving partial overlap of switch connection modules with power connection modules.

Fig. 4b shows an embodiment of the invention comprising an extended housing 10 similar to that of Fig. 4a, in which the connection modules 11 are alternately staggered with wall pieces 12 over a part of the length and two pairs of data sockets arranged near one end. In this embodiment it is important that a separator-piece 14 be present in the array so as to separate the power and data areas from each other and forestall the possibility that communications equipment attached to the data sockets may become detrimentally affected by the proximity of the power cables. Naturally the power delivery cable or cables and the data delivery cable must also enter the housing at different points, most conveniently through opposite ends. In view of other safety considerations, embodiments of the invention where the connection modules 11 comprise more than six power sockets, will typically have one or more openings 152 in the end-piece 15 leading to the power connection area so as to allow the entry of more than one power cable. In embodiments of the present invention in which the support structure is built into furniture to BS6393, the structure may have up to six sockets per power supply, limited to a 3.15A fuse rating separately fused or a 7A single overall fuse. Alternatively four sockets per power supply at 5A fuse rating separately fused or two sockets without separate fuses may be used. It is should be noted that safety considerations generally require that any item of equipment rated higher than 5A must be independently connected to the buildings supply.

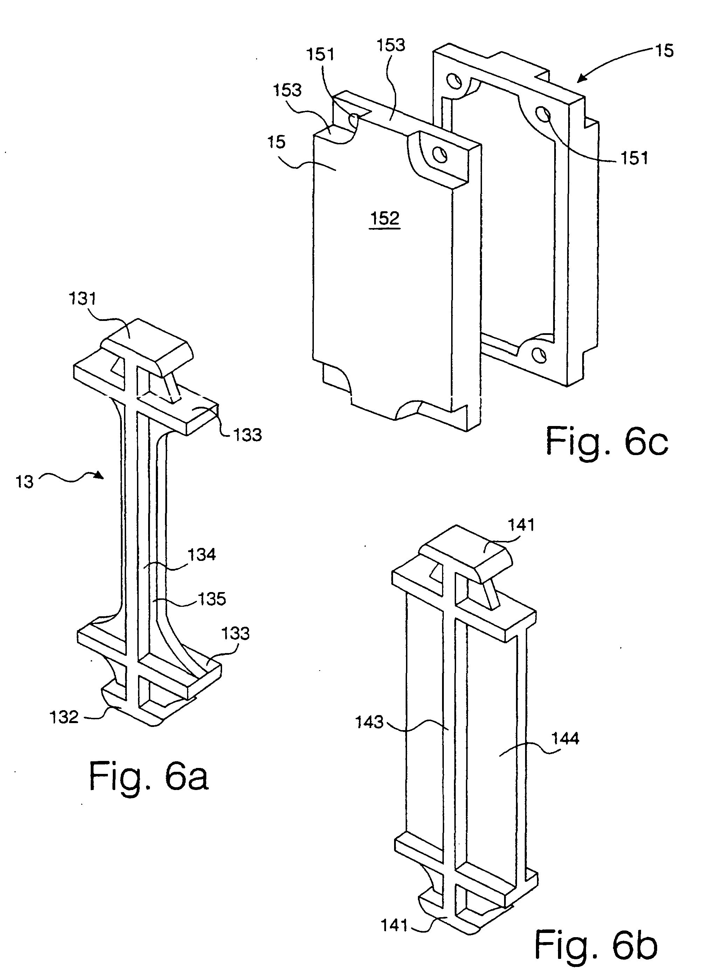

Referring now to Fig. 5, strip 16 is formed by extrusion so as to define an elongate member having three channels on either side of a median plane defined by a central web 164 and in which there is symmetry about a transverse plane. Channels 161 and 162 extending along the longitudinal length of strip 16 provide first connection means for forming the housing. Each channel 161 is generally defined by two wall elements 1611 and 1612 the latter of which has thereon defined a protuberance forming a rail element 1613 extending along the longitudinal length of the channel 161. For connection of a module 11, an edge of module 11 is provided with a rebate (not shown) which can be engaged by the protuberance 1613.

Referring now to Figs. 5 to 7, it will be seen that channel 162 is shaped to receive one end of a bridging-piece 13 to hold together the two strips 16. In particular Fig. 6a shows the shape of a bridging-piece 13 as having trapezoidal projections 131 and 132 at opposite ends to engage in respective channels 162 of opposite strips. The channel 162 generally comprises wall elements 1621 having inwardly projecting protuberances 1622 at their outer edge which snap engage over the inclined ends of projections 131, 132. A transverse platform 133 underlies the projections and engages projections 1624 extending from the coplanar faces 1623 of the strip 16.

As can be seen in Fig. 6a, the bridging-piece 13 has a narrow body 134 allowing wires to pass on either side when it is fitted between two strips 16 to define the housing 10

Referring now to Fig. 5 and 6c third connection means for end-pieces 15 comprise a near circular groove 163 extending along the longitudinal length of the strip 16.

The groove 163 is provided between channels 161 and 162 but facing outwardly of the housing 10. Placement of the end-piece 15 aligns apertures 151 therein provided over respective grooves 163 so that fixing screws can be inserted through the apertures 151 and into the grooves. The groove may be wholly or partially threaded along its longitudinal length or, if a self-tapping screw is used, unthreaded.

End-pieces 15, separator-pieces 14 and bridging-pieces 13 may be formed by injection moulding. In the illustrated embodiment of the invention the end-pieces 15 are generally rectangular and have wall portions 152 with an upper lip portion 153. End-pieces 15 are formed as trays so that lugs (not shown) which protrude from the edges of the sockets, wall-pieces etc can be housed within the recess of the tray. The lugs, which are present on known sockets and the like one per side and off-centre with corresponding slots in opposite edges, normally knit the sockets etc together so as to prevent them falling in or out when the structure is twisted. Lugs on adjacent edges locate into channel 161 Curvilinear recesses 153 are provided at the comers of the wall portions 152 through which apertures 151 are formed. In this embodiment end-piece 15 resembles a tray and the cavity therein defined can provide valuable extra space for the wiring associated with connection modules 11. In other embodiments (not shown), however, the end-piece may simply comprise a flat plate with appropriate apertures 151.

In the illustrated embodiment of the invention the bridging-piece 13 comprises a narrow body 134 with integrally formed platforms 131 transversely adjacent each end from which the projections 131 extend. The narrow body 134 provides surfaces 135 for guiding wiring so that the wiring remains within the side part of the housing appropriate to the facing direction of its associated connection module.

Figure 6b illustrates a separator-piece 14 which is similarly formed to bridging-piece with projections 151 at its ends for connection to the strips 16. The main wall 144, however, is generally rectangular and of dimensions such as to occupy the entire space between two parallel strips 16 engaged on respective opposite projections 141 and obstruct the passage of wiring along the housing 10, thus forming a separating partition.

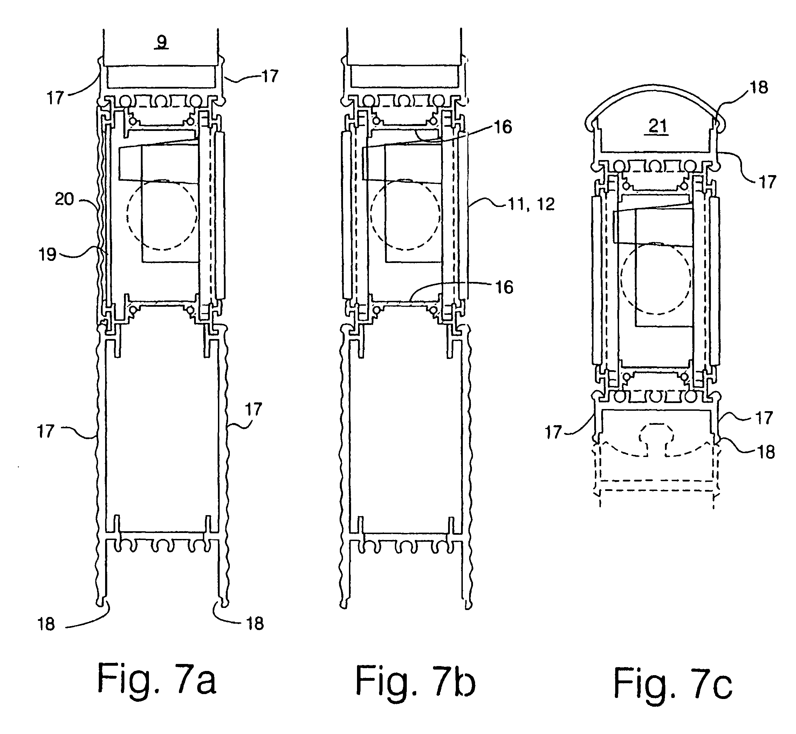

Referring now to Figs. 5 and 7a and b, a fourth connection means for engaging the top of completed housing with a complementary aluminium strip 18 is provided by a generally L-shaped hook element 1643 upstanding from the wall element 1642 on strip 16. Hook element 1643 engages into a channel 191 extending the longitudinal length the aluminium strip 17.

As shown in Figs. 7a and 7b, engagement means for engaging the housing to a panel or screen are provided by connection to aluminium strips 17. The aluminium strips are arranged as rails above and below the housing 10 and comprise holding means 18 for receiving a panel or screen 9. The screen, may be floor-standing and independent of desking, floor-standing with desking attached or may simply be attached to desking for example where the bottom edge of a bottom aluminium rail finishes flush with the bottom edge of the desk surface. The assembly may also comprise housing 10 mounted between the aluminium rails and added to the bottom edge (for example) of a desk-mounted screen which has been fitted previously. The assembly may also comprise the support structure mounted between an aluminium rail fitted to the bottom edge of desk surfaces or desk structures.

Referring to Fig. 7a in particular, an embodiment of the invention comprising an assembly in which sockets face out of the support structure in a single direction has a backing plate 19. The backing plate 19, which serves to electrically insulate the reverse face of the assembly, extends the full length of the support structure. Referring also to Fig. 4, backing plate 19 connects into the channel 164 defined by wall elements 1641 and 1642 in strip 16.

Referring back to Fig. 7a, in this embodiment a ribbed aluminium fascia 20 hides the backing plate 20. The fascia 20 may extend the full length of the housing itself or may comprise a series of modular lengths. One or more aluminium fascia may also be attached to the side of the assembly from which the sockets face so as to fill the difference between the length of the housing and the length of the screen. The fascia 20 may be attached to either side of the housing so as to allow the housing to be positioned at any point along the length of the screen and allow a space at one end for cables to exit from the support structure and pass into a gap 21 defined by the bottom aluminium rail, and out a machined slot in aluminium strip 17, to a power supply. A plastic carrier extrusion, similar to strip 16, will be used to slide into the top or bottom aluminium rail to enable attachment of the aluminium fascia onto areas of the screen where there is no support structure. The aluminium fascia 20 have form engagement means, such as snap-fit engagement means for engagement to strip element 16 or similar and will be removeable to enable cable dumping. This may be facilitated by providing them with a machined finger aperture or cable entry or exit slot.

The present invention therefore provides a connector organiser of considerable versatility allowing connector modules to face in opposite directions and at the same time be closely packed within the assembly. The present invention further allows the number and nature of the connection modules to be selected, prior to installation, to suit the needs of the ottice or workplace environment.

Although described and illustrated in a horizontal orientation it will be understood that the support structure 10 may be mounted vertically, for example along one lateral edge of the screen 9 or at an intermediate location.

## Claims

1. A support structure for supporting a plurality of utility modules (11, 12) in an array, said structure comprising two elongate support elements (16) and holding means (13, 14, 15) for holding the said two elongate support elements (16) in a predetermined juxtaposed relationship with respective opposite longitudinal edges thereof parallel to one another and in pairs comprising one from each of said elongate support elements, and in which the said utility modules are locatable between each said pair of longitudinal edges, **characterised in that** the said holding means (13, 14) span between the said elongate support elements at intervals along the length of the said elongate support elements, and **in that** a utility module (11) which extends beyond the median plane between the support elements (16) is form-engaged to span between one pair of edges at a selected position along the length of the said elongate elements (16).

2. A support structure according to Claim 1, in which the said holding means (13,14,15) are connectable to both the said elongate support elements (16).

3. A support structure according to Claim 1, in which the said holding means (13,14,15) are integrally formed with each of the said elongate support elements (16).

4. A support structure according to Claim 2, in which the said holding means (13,14,15) comprise the said utility modules (11,12).

5. A support structure according to Claim 2 in which the said holding means (13,14,15) comprise one or more connector elements.

6. A support structure according to Claim 5, in which the said connector element comprises a bridge member (13) shaped so as to allow the passage of wiring or conduits in a direction parallel to the longitudinal direction of the said elongate support elements (16).

7. A support structure according Claim 5, in which said connector element comprises a screen shaped so as to prevent the passage of wiring or conduits in a direction parallel to the longitudinal direction of the said elongate support elements (16).

8. A support structure according to Claims 5 to 7, in which the said connector means comprises end-pieces (15) shaped so as to close the said support structure into a housing.

9. A support structure according to Claim 5, in which said connector element comprises a wall element (12) for determining the position of said utility modules along the longitudinal length of said elongate support elements (16).

10. A support structure according to any of Claims 2 to 7 and 9, in which the said holding means (13,14,15) connect to the said elongate support elements (16) by form-engagement.

11. A support structure according to Claim 10, in which said form-engagement comprise snap-fit engagement means.

12. A support structure according to Claim 8, further comprising guide means including means for guiding cables into and/or out of the said housing.

13. A support structure according to any one of Claim 10 to 12, in which the said holding means are secured to the elongate support elements (16) by fasteners.

14. A support structure according to Claim 13, in which said fasteners are screw-fasteners.

15. A support structure according to any preceding Claim, in which said utility modules (11,12) are selected from any of the group comprising sockets, switches, lamps or other electrical connectors and connectors for optical fibres, gas, water or air pipes, including valves and meters.

16. A support structure according to any preceding Claim, in which each elongate support element (16) has further engagement means for engaging a panel or like member, said engagement means being located upon each surface of said elongate support element (16) facing away from the other of said elongate support element.

17. A support structure according to Claim 16, in which said engagement means comprises form-engagement means.

18. An assembly comprising a support structure according to any previous Claim and a panel engaged to a surface of at least one said elongate support element (16), said surface facing away from said respective other of said elongate support elements (16).

19. An assembly according to Claim 18, in which opposite faces of the said support structure are spaced a smaller distance from one another than opposite faces of the panel.

20. An assembly according to Claim 19, in which opposite faces of the said support structure are spaced apart from one another by a greater distance than opposite faces of the panel.

21. An assembly comprising a support structure according to any of Claims 1 to 17 and a panel engaged on a surface of each of said elongate support elements (16), said surface facing away from said other of said elongate support elements (16).

22. An assembly according to any of Claims 18 to 21, in which the or each panel comprises separate panel elements at or adjacent respective lateral edges of the said surface of the or each elongate support element (16).

23. A kit of parts for the construction of a support structure or assembly according to any previous Claim, comprising said parts and instructions for construction of said support structure or assembly.

## Patentansprüche

1. Trägerstruktur zum Halten einer Mehrzahl von Anschlussmodulen (11, 12) in einer Reihe, wobei die Struktur aus zwei länglichen Trägerelementen (16) und Haltemitteln (13, 14, 15) zum Halten der zwei länglichen Trägerelemente (16) in einer bestimmten gegenüber liegenden Beziehung besteht, wobei die jeweiligen gegenüber liegenden Längskanten parallel zueinander und paarweise angeordnet sind und jeweils aus einem der länglichen Trägerelemente bestehen, und wobei die Anschlussmodule zwischen den Paaren von Längskanten anzuordnen sind, **dadurch gekennzeichnet, dass** die Haltemittel (13, 14) sich zwischen den länglichen Trägerelementen in Abständen entlang der länglichen Trägerelemente erstrecken und dass ein Anschlussmodul (11) das sich zwischen den Trägerelementen (16) über die Mittelebene erstreckt formschlüssig an einer ausgewählten Position entlang der Länge der länglichen Elemente (16) angeordnet ist.

2. Trägerstruktur nach Anspruch 1, bei der die Haltemittel (13, 14, 15) mit beiden länglichen Trägerelementen (16) verbindbar sind.

3. Trägerstruktur nach Anspruch 1, wobei die Haltemittel (13, 14, 15) integriert mit den beiden länglichen Trägerelementen (16) ausgebildet sind.

4. Trägerstruktur nach Anspruch 2, wobei die Haltemittel (13, 14, 15) aus den Anschlussmodulen (11, 12) bestehen.

5. Trägerstruktur nach Anspruch 2, wobei die Haltemittel (13, 14, 15) aus einem oder mehreren Anschlussselementen bestehen.

6. Trägerstruktur nach Anspruch 5, wobei das Anschlusselement ein Brückenglied (13) besitzt, das so geformt ist dass es den Durchgang von Kabeln oder Leitungen in einer Richtung erlaubt, die parallel zu der Längsrichtung der länglichen Trägerelemente (16) liegt.

7. Trägerstruktur nach Anspruch 5, wobei das Anschlusselement eine Blende besitzt, die so geformt ist dass es den Durchgang von Kabeln oder Leitungen in einer Richtung erlaubt, die parallel zu der Längsrichtung der länglichen Trägerelemente (16) liegt.

8. Trägerstruktur nach Anspruch 5 bis 7, wobei das Anschlusselement Endstücke (15) besitzt, die so geformt sind, dass sie die Trägerstruktur zu einem Gehäuse verschließen.

9. Trägerstruktur nach Anspruch 5, wobei das Anschlusselement ein Wandteil (12) besitzt, das die Position der Anschlussmodule entlang der länglichen Trägerelemente (16) bestimmt.

10. Trägerstruktur nach einem der Ansprüche 2 bis 7 und 9, wobei die Haltemittel (13, 14, 15) mit den länglichen Trägerelementen (16) formschlüssig verbunden sind.

11. Trägerstruktur nach Anspruch 10, wobei das formschlüssige Ineinandergreifen durch Schnappverbindungsmittel erfolgt.

12. Trägerstruktur nach Anspruch 8, weiter bestehend aus Führungsmitteln, die Mittel zum Führen von Kabeln in das und/oder aus dem Gehäuse besitzen.

13. Trägerstruktur nach Anspruch 10 bis 12, wobei die Haltemittel durch Feststeller an den länglichen Trägerelementen (16) befestigt sind.

14. Trägerstruktur nach Anspruch 13, wobei die Feststellmittel Schraubmittel sind.

15. Trägerstruktur nach einem der vorhergehenden Ansprüche, wobei die Anschlussmodule (11, 12) aus der Gruppe gewählt sind, die Stecker, Schalter, Lampen oder andere elektrische Anschlüsse und Anschlüsse von optischen Fasern, Gas-, Wasser-oder Luftrohren, einschließlich Ventilen und Armaturen umfasst.

16. Trägerstruktur nach einem er vorhergehenden Ansprüche, wobei jedes längliche Trägerelement (16) weiter Mittel zum Eingriff in eine Abdeckung oder dergleichen besitzt, wobei die Eingriffsmittel auf beiden Seiten des länglichen Trägerelements (16) angeordnet und dem anderen länglichen Trägerelement abgewandt sind.

17. Trägerstruktur nach Anspruch 16, wobei das Eingriffselement aus formschlüssigen Mitteln besteht.

18. Baugruppe mit einer Trägerstruktur nach einem der vorhergehenden Ansprüche und mit einer Abdeckung, die mit der Oberseite wenigstens eines der länglichen Trägerelemente (16) in Eingriff steht, wobei die Oberseite von dem entsprechenden anderen länglichen Trägerelement (16) abgewandt ist.

19. Baugruppe nach Anspruch 18, wobei entgegen gesetzte Seiten der Trägerstruktur einen kleineren Abstand voneinander entfernt sind, als die entgegen gesetzten Seiten der Abdeckung.

20. Baugruppe nach Anspruch 19, wobei entgegen gesetzte Seiten der Trägerstruktur einen größeren Abstand voneinander entfernt sind, als die entgegen gesetzten Seiten der Abdeckung.

21. Baugruppe mit einer Trägerstruktur entsprechend einem der Ansprüche 1 bis 17 und mit einer Abdeckung, die mit der Oberseite beider länglicher Trägerelemente (16) in Eingriff steht, wobei die Oberseite von dem anderen länglichen Trägerelement (16) abgewandt ist.

22. Baugruppe entsprechend einem der Ansprüche 18 bis 21, wobei die Abdeckung oder die Abdeckungen aus separaten Abdeckungselementen besteht, die an oder neben den jeweiligen Seitenkanten der Oberseite des oder jedes länglichen Trägerelements (16) angeordnet sind.

23. Bausatz für eine Trägerstruktur oder eine Baugruppe gemäß einem der vorhergehenden Ansprüche, bestehend aus den genannten Teilen und einer Anleitung zum Zusammenbau der Trägerstruktur oder der Baugruppe.

## Revendications

1. Structure de support pour supporter une pluralité de modules utilitaires (11, 12) dans une matrice, ladite structure comprenant deux éléments de support allongés (16) et des moyens de fixation ou de support (13, 14, 15) pour maintenir lesdits deux éléments de support allongés (16) dans une relation juxtaposée prédéterminée avec les bords longitudinaux opposés respectifs de ces derniers parallèles les uns par rapport aux autres et par paires comprenant l'un de chacun desdits éléments de support allongés, et dans laquelle lesdits modules utilitaires peuvent être placés entre chacune desdites paires de bords longitudinaux, **caractérisée en ce que** lesdits moyens de fixation (13, 14) s'étendent entre lesdits éléments de support allongés selon des intervalles le long de la longueur desdits éléments de support allongés, et **en ce qu'**un module utilitaire (11) qui s'étend au-delà du plan médian entre les éléments de support (16) est enclenché ou vient en engagement avec coopération de forme de façon à s'étendre entre une paire de bords au niveau d'une position sélectionnée le long de la longueur desdits éléments allongés (16).

2. Structure de support selon la revendication 1, dans laquelle lesdits moyens de fixation (13, 14; 15) peuvent être connectés aux deux desdits éléments de support allongés (16).

3. Structure de support selon la revendication 1, dans laquelle lesdits moyens de fixation (13, 14, 15) sont formés intégralement avec chacun desdits éléments de support allongés (16).

4. Structure de support selon la revendication 2, dans laquelle lesdits moyens de fixation (13, 14, 15) comprennent lesdits modules utilitaires (11, 12).

5. Structure de support selon la revendication 2, dans laquelle lesdits moyens de fixation (13, 14, 15) comprennent un ou plusieurs éléments connecteurs.

6. Structure de support selon la revendication 5, dans laquelle ledit élément connecteur comprend une partie pont (13) ayant une forme permettant le passage de câblage ou de conduits dans une direction parallèle à la direction longitudinale desdits éléments de support allongés (16).

7. Structure de support selon la revendication 5, dans laquelle ledit élément connecteur comprend un écran ayant une forme empêchant le passage de câblage ou de conduits dans une direction parallèle à la direction longitudinale desdits éléments de support allongés (16).

8. Structure de support selon les revendications 5 à 7, dans laquelle ledit moyen de connexion comprend des embouts (15) ayant une forme fermant ladite structure de support dans un boîtier ou un caisson.

9. Structure de support selon la revendication 5, dans laquelle ledit élément connecteur comprend un élément de paroi (12) pour déterminer la position desdits modules utilitaires le long de la longueur longitudinale desdits éléments de support allongés (16).

10. Structure de support selon l'une quelconque des revendications 2 à 7 et 9, dans laquelle lesdits moyens de fixation (13, 14, 15) sont reliés aux dits éléments de support allongés (16) par enclenchement ou engagement de forme.

11. Structure de support selon la revendication 10, dans laquelle ledit enclenchement comprend un moyen d'enclenchement encliquetable.

12. Structure de support selon la revendication 8, comprenant en outre un moyen de guidage comprenant un moyen pour guider les câbles à l'intérieur et/ou à l'extérieur dudit boîtier.

13. Structure de support selon l'une quelconque des revendications 10 à 12, dans laquelle lesdits moyens de fixation sont fixés aux éléments de support allongés (16) par des attaches.

14. Structure de support selon la revendication 13, dans laquelle lesdites attaches sont des vis.

15. Structure de support selon l'une quelconque des revendications précédentes, dans laquelle lesdits modules utilitaires (11, 12) sont sélectionnés parmi le groupe comprenant les prises femelles, les interrupteurs, les lampes ou tout autre connecteur électrique et les connecteurs destinés aux fibres optiques, conduites de gaz, d'eau ou d'air, y compris les vannes et les compteurs.

16. Structure de support selon l'une quelconque des revendications précédentes, dans laquelle chaque élément de support allongé (16) possède un autre moyen d'enclenchement ou de venue en prise pour fixer ou venir en engagement avec un panneau ou un élément similaire, ledit moyen d'enclenchement étant situé sur chaque surface dudit élément de support allongé (16) dirigé à l'opposé de l'autre desdits éléments de support allongés.

17. Structure de support selon la revendication 16, dans laquelle ledit moyen d'enclenchement ou de venue en prise comprend un moyen d'enclenchement ou d'engagement par forme.

18. Assemblage comprenant une structure de support selon l'une quelconque des revendications précédentes et un panneau fixé à une surface d'au moins un desdits éléments de support allongés (16), ladite surface étant dirigée à l'opposé dudit autre respectif desdits éléments de support allongés (16).

19. Assemblage selon la revendication 18, dans lequel des faces opposées de ladite structure de support sont espacées l'une de l'autre par une distance inférieure à la distance séparant les faces opposées du panneau.

20. Assemblage selon la revendication 19, dans lequel des faces opposées de ladite structure de support sont espacées l'une de l'autre par une distance supérieure à la distance séparant les faces opposées du panneau.

21. Assemblage comprenant une structure de support selon l'une quelconque des revendications 1 à 17 et un panneau fixé sur une surface de chacun desdits éléments de support allongés (16), ladite surface étant dirigée à l'opposé dudit autre desdits éléments de support allongés (16).

22. Assemblage selon l'une quelconque des revendications 18 à 21, dans lequel le panneau ou chaque panneau comprend des éléments de panneau séparés au niveau des ou adjacents aux bords latéraux respectifs de ladite surface de l'élément ou de chaque élément de support allongé (16).

23. Kit ou ensemble de pièces pour la construction d'une structure de support ou d'un assemblage selon l'une quelconque des revendications précédentes, comprenant lesdites pièces et des instructions pour la construction de ladite structure de support ou dudit assemblage.
